**Europäisches Patentamt**

**European Patent Office**

**Office européen des brevets**

(19)

(11) Veröffentlichungsnummer : **0 486 432 A1**

(12) # EUROPÄISCHE PATENTANMELDUNG

(21) Anmeldenummer : **91810890.3**

(22) Anmeldetag : **15.11.91**

(51) Int. Cl.⁵ : **F16L 35/00,** F16L 27/08, F16L 37/18, E04G 21/04

(30) Priorität : **15.11.90 DE 9015643 U**

(43) Veröffentlichungstag der Anmeldung : **20.05.92 Patentblatt 92/21**

(84) Benannte Vertragsstaaten : **AT CH DE ES FR IT LI**

(71) Anmelder : **WBT WIRTSCHAFTSBERATUNGS TRUST REG Schaanerstrasse 79 FL-9487 Bendern (LI)**

(72) Erfinder : **Kersting, Wolfgang Essanestrasse 257 FL-9492 Eschen (LI)**

(74) Vertreter : **Münch, Otto et al Patentanwalts-Bureau Isler AG Postfach 6940 CH-8023 Zürich (CH)**

(54) **Auslaufvorrichtung an einem Förderschlauch für Beton, Mörtel, Estrich oder dgl.**

(57)   Die Auslaufvorrichtung besteht aus einem in einem Gestell (2) befestigten, nach unten offenen Gummitopf (4). Das Gestell (2) hat mehrere Standbeine (3). Vom Gestell (2) steht ein Anschlussstutzen (5) schräg nach unten ab. Ein Förderschlauch (8) für Mörtel oder Estrich ragt durch den Stutzen (5) in den Topf (4). Mittels einer auf dem Aussenumfang des Schlauches (8) befestigten Muffe (11) und eines Kupplungsstücks (17) ist der Schlauch (8) drehbar mit dem Stutzen (5) verbunden. Dadurch wird eine gute Standsicherheit des Gestells (2) und eine leichte Handhabung am Arbeitsplatz erreicht.

EP 0 486 432 A1

EP 0 486 432 A1

Eine Auslaufvorrichtung gemäss Oberbegriff des Anspruchs 1 ist durch Vorbenutzung bekannt. Sie besteht aus einem nach unten offenen Gummitopf, der in einem Gestell mit Beinen befestigt ist. Am Gestell ist ferner ein Anschlussstutzen festgeschweisst, der in den Topf mündet. Der Stutzen hat den gleichen Innendurchmesser wie der Schlauch. Bündig mit dem Schlauchende ist am Schlauch aussen eine Muffe befestigt. Ein Kupplungsschloss presst die Muffe gegen das freie Stutzenende. Zur Abdichtung ist zwischen Muffe und Stutzen ein Gummidichtring angeordnet. Eine geeignete derartige Kupplung ist in der EP-PS 298'023 beschrieben. Bei der Handhabung einer solcher Auslaufvorrichtung hat sich ergeben, dass die Gestelle manchmal zu wenig standsicher sind.

Der vorliegenden Erfindung liegt die Aufgabe zugrunde, diesen Nachteil zu beseitigen. Diese Aufgabe wird durch die kennzeichnenden Merkmale des Anspruchs 1 gelöst.

Weil der Schlauch bei der erfindungsgemässen Lösung bis in den Topf hineinragt, kann auf die Abdichtung zwischen Muffe und Stutzen verzichtet werden. Dies ermöglicht eine frei drehbare Kupplung des Schlauches. Dadurch können Verwindungen des Schlauches, die gelegentlich zum Kippen des Gestells führten, vermieden werden. Das Gestell ist damit standsicherer. Die drehbare Kupplung erleichtert auch wesentlich die Handhabung am Arbeitsplatz.

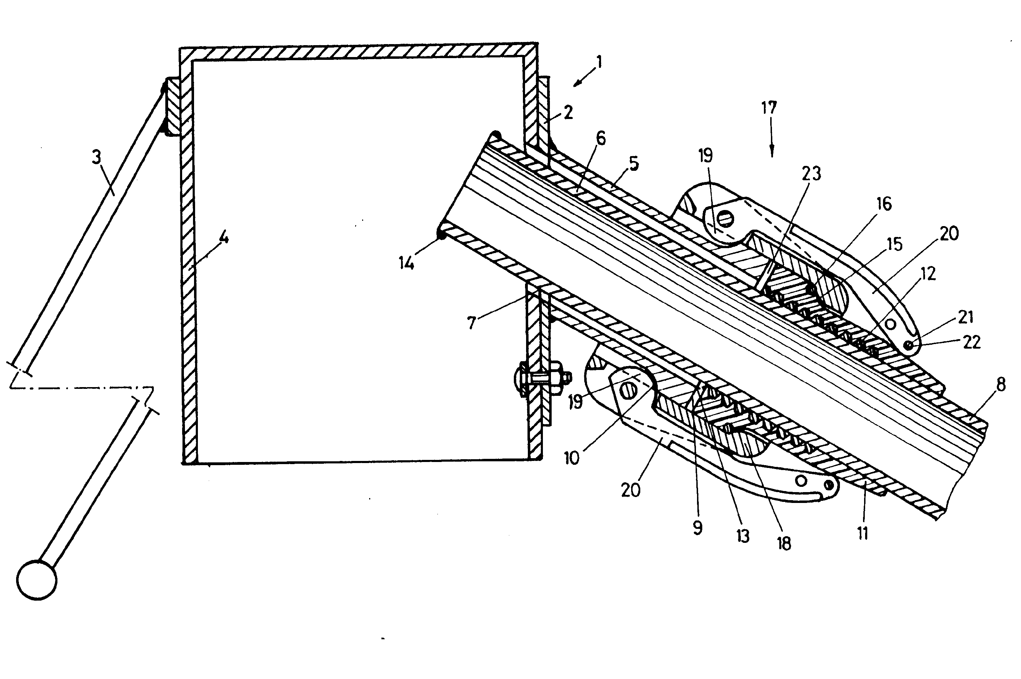

Nachfolgend wird ein Ausführungsbeispiel der Erfindung anhand der Zeichnung erläutert. Die einzige Figur zeigt einen Vertikalschnitt durch eine erfindungsgemässe Auslaufvorrichtung.

Die dargestellte Vorrichtung besteht aus einem stählernen Gestell 1 bestehend aus einem zylindrischen Stahlmantel 2 mit drei oder vier Beinen 3, von denen nur eines verkürzt dargestellt ist. Am Mantel 2 ist ein nach unten offener, zylindrischer Gummitopf 4 angeschraubt. Am Mantel 2 ist ein schräg nach unten ragender Anschlussstutzen 5 angeschweisst. Die zylindrische Bohrung 6 des Stutzens 5 setzt sich in Bohrungen 7 durch den Mantel 2 und die Seitenwand des Topfes 4 fort. Ihr Durchmesser ist grösser als der Aussendurchmesser des angeschlossenen Förderschlauches 8. Der Stutzen 5 hat benachbart seiner Stirnfläche 9 eine von der Stirnfläche 9 weggerichtete, torusförmige Schulter 10.

Auf dem Aussenumfang des Schlauches 8 ist eine Muffe 11 in der in der EP-PS 298'023 beschriebenen Art befestigt: Auf dem Schlauch 8 ist ein Aussengewinde 12 aus Gummi aufvulkanisiert. Dieses Gewinde 12 wird mit einem Gleitkleber, z.B. einer Gummilösung, bestrichen und anschliessend die Muffe 11 mit ihrem Innengewinde aufgeschraubt. Nach dem Aushärten des Klebers ist die Muffe 11 starr mit dem Schlauch 8 verbunden.

Abweichend von der im EP-Patent 298'023 beschriebenen Schlauchkupplung ist der Schlauch 8 nicht bündig mit dem Stirnende 13 der Muffe 11, sondern der Schlauch 8 ist durch die Bohrungen 6, 7 bis ins Innere des Topfes 4 weitergeführt. An seinem freien Ende ist eine ringförmige Tropfnase angebracht, die ein Rückfliessen von Wasser dem Schlauch entlang in die Bohrungen 6, 7 verhindert. Ferner besteht die Muffe 11 hier aus Kunststoff, und sie hat an einer von der Stirnfläche 13 abgewandten Schulter 15 einen eingegossenen Stahlring 16 als Verschleissschutz.

Das Kupplungsschloss 17, welches die Muffe 11 mit dem Stutzen 5 verbindet, entspricht jenem gemäss EP-Patent 298'023. Es hat am einen Ende eine nach innen gerichtete Schulter 18 zur Anlage am Ring 16 und am andern Ende Exzenter 19 von Schwenkhebeln 20, welche die Schulter 10 hintergreifen. Zur Sicherung der Hebel 20 in der dargestellten geschlossenen Stellung ist in Bohrungen 21 am freien Hebelende ein Federbügel 22 aus Stahl eingeschnappt. Zwischen den Stirnenden 9, 13 ist Spiel 23, so dass der Schlauch 8 mit der Muffe 11 gegenüber dem Gestell 1 frei drehen kann.

In der Zeichnung sind Stutzen 5, Schlauch 8, Muffe 11 und Schloss 17 gegenüber dem Topf 4 der besseren Uebersicht wegen übertrieben gross dargestellt.

**Patentansprüche**

1. Auslaufvorrichtung an einem Förderschlauch (8) für Beton, Mörtel, Estrich oder dgl., bestehend aus einem nach unten offenen Topf (4), der in einem Gestell (1) mit Beinen (3) befestigt ist, einem am Gestell (1) befestigten, durch eine Bohrung (7) in der Seitenwand des Topfes (4) in den Topf (4) mündenden Anschlussstutzen (5), einer am Schlauch (8) befestigten Muffe (11) sowie einem Kupplungsstück (17) zum Verbinden der Muffe (11) mit dem freien Ende des Stutzens (5), dadurch gekennzeichnet, dass der Innendurchmesser des Stutzens (5) sowie der Durchmesser der Bohrung (7) grösser sind als der Aussendurchmesser des Schlauches (8), dass die Muffe (11) beabstandet vom Schlauchende auf dem Aussenumfang des Schlauches (8) befestigt ist, und dass zwischen den einander zugewandten Stirnflächen (9,13) der Muffe (11) und des Stutzens (5) Spiel besteht, derart, dass das freie Schlauchende in den Topf (4) ragt und der Schlauch (8) relativ zum Gestell (1) frei drehbar ist.

2

2. Vorrichtung nach Anspruch 1, dadurch gekennzeichnet, dass am freien Schlauchende am Aussenumfang eine Tropfnase (14) angebracht ist.

3. Vorrichtung nach Anspruch 1 oder 2, wobei das Kupplungsstück zwei Hebel (20) mit Exzenterflächen (19) hat, die im gekoppelten Zustand eine Schulter (10) benachbart dem freien Ende des Stutzens (5) hintergreifen, dadurch gekennzeichnet, dass die Hebel (20) im geschlossenen Zustand durch einen Federbügel (22) gesichert sind.

4. Vorrichtung nach einem der Ansprüche 1 bis 3, dadurch gekennzeichnet, dass die Muffe (11) aus einem Kunststoffkörper besteht, in welchen an der Stelle, wo das Kupplungsstück (17) anliegt, ein Metallring (16) eingegossen ist.

Europäisches
Patentamt

# EUROPÄISCHER RECHERCHENBERICHT

Nummer der Anmeldung

EP     91 81 0890

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | DE-A-3 240 465 (WIBAU AG)<br>* Ansprüche; Abbildungen *<br>--- | 1 | F16L35/00<br>F16L27/08<br>F16L37/18<br>E04G21/04 |
| A<br>D | EP-A-0 298 023 (ECONT CORP. LTD)<br><br>* Zusammenfassung; Abbildungen *<br>--- | 1,3 | |
| A | FR-A-1 218 127 (A.GOYER)<br>* Abbildungen *<br><br>----- | 2 | |
| | | | **RECHERCHIERTE SACHGEBIETE (Int. Cl.5 )**<br><br>F16L<br>E04G |

Der vorliegende Recherchenbericht wurde für alle Patentansprüche erstellt

| Recherchenort | Abschlußdatum der Recherche | Prüfer |
|---|---|---|
| DEN HAAG | 28 FEBRUAR 1992 | Andreas Bartsch |